# EUROPÄISCHE PATENTANMELDUNG

(11) **EP 2 740 393 A1**
(43) Veröffentlichungstag der Anmeldung: **11.06.2014**
(21) Anmeldenummer: 12196323.5
(22) Anmeldetag: 10.12.2012
(51) Int. Cl.: A47J 37/07

(54) **Stecksystem eines Grills**

(71) Anmelder: Test Rite International (Germany) GmbH, 22143 Hamburg (DE)
(72) Erfinder: Zimmermann, Dirk, 22926 Ahrensburg (DE)
(74) Vertreter: Müller, Karl-Ernst

(57) **Zusammenfassung**

Die Erfindung betrifft ein Stecksystem eines, vorzugsweise mobilen, Grills (10) mit wenigstens drei, im Wesentlichen vertikalen, aufstellbaren oder aufgestellten Beinstützen (12.1, 12.2, 12.3, 12.4), insbesondere mit vier Beinstützen (12.1, 12.2, 12.3, 12.4), mit einem Verbindungskörper (14) zum Verbinden der Beinstützen (12.1, 12.2, 12.3, 12.4), wobei die Beinstützen (12.1, 12.2, 12.3, 12.4) im unteren Bereich mittels des Verbindungskörpers (14) jeweils miteinander unter Ausbildung einer Klemmsteckverbindung verbindbar oder verbunden sind, und mit einer oberhalb des Verbindungskörpers (14) angeordneten oder anordbaren Feuerkammer (16) zur Aufnahme von Verbrennungsmaterial, insbesondere Grillkohle oder Grillbriketts oder Holzkohle, wobei die, vorzugsweise einteilige oder mehrteilige, Feuerkammer (16) mit den, insbesondere allen, Beinstützen (12.1, 12.2, 12.3, 12.4) jeweils unter Ausbildung einer Klemmsteckverbindung mit einer Beinstütze (12.1, 12.2, 12.3, 12.4) verbindbar oder verbunden ist.

Ferner betrifft die Erfindung einen Grill (10), insbesondere einen mobilen Grill (10), mit einem Stecksystem.

## Beschreibung

Die Erfindung betrifft ein Stecksystem eines, vorzugsweise mobilen, Grills sowie einen Grill, insbesondere einen mobilen Grill.

Für die Zubereitung von Speisen werden Grills, insbesondere Holzkohlengrills, eingesetzt, die vorzugsweise im Freien aufgestellt sind. Hierbei werden Grills verwendet, bei denen die Teile eines transportablen Grills miteinander verschraubt oder verschweißt sind.

Die Aufgabe der vorliegenden Erfindung besteht darin, einen Grill bereitzustellen, der auf einfache Weise und unter Weglassung von Werkzeug einfach aufgestellt werden kann.

Die Aufgabe wird gelöst durch ein Stecksystem eines, vorzugsweise mobilen, Grills mit wenigstens drei, im Wesentlichen vertikalen, aufstellbaren oder aufgestellten Beinstützen, insbesondere mit vier Beinstützen, mit einem Verbindungskörper zum Verbinden der Beinstützen, wobei die Beinstützen im unteren Bereich mittels des Verbindungskörpers jeweils miteinander unter Ausbildung einer Klemmsteckverbindung verbindbar oder verbunden sind, und mit einer oberhalb des Verbindungskörpers angeordneten oder anordbaren Feuerkammer zur Aufnahme von Verbrennungsmaterial, insbesondere Grillkohle oder Grillbriketts oder Holzkohle, wobei die, vorzugsweise einteilige oder mehrteilige, Feuerkammer mit den, insbesondere allen, Beinstützen jeweils unter Ausbildung einer Klemmsteckverbindung mit einer Beinstütze verbindbar oder verbunden ist.

Die Erfindung beruht auf dem Gedanken, dass ein mobiler Grill ohne Verbindungsmittel, d.h. verbindungsmittelfrei, wie z.B. Schrauben oder Bolzen, zusammengesteckt wird, wobei der Verbindungskörper und die Feuerkammer mit den Beinstützen ausschließlich durch Klemmsteckverbindungen miteinander verbunden werden, d.h. dass keine weiteren Verbindungsmittel hierzu eingesetzt werden. Durch die vorzugsweise lösbaren Klemmsteckverbindungen zwischen den Beinstützen und dem Verbindungskörper als auch durch die Klemmsteckverbindungen der Beinstützen mit der Feuerkammer wird ein standsicherer Grill bereitgestellt, wobei der Verbindungskörper im unteren Bereich der Beinstützen diese miteinander verbindet und die Feuerkammer oberhalb des Verbindungskörpers eingesetzt ist.

Dazu ist in einer Weiterbildung vorgesehen, dass der Verbindungskörper für die Beinstützen, vorzugsweise in den Eckbereichen, mit Steckkörpern, insbesondere Stecklaschen, ausgebildet ist und die Beinstützen jeweils mit Steckaufnahmen für die Steckkörper des Verbindungskörpers versehen sind, wobei ein Steckkörper, insbesondere eine Stecklasche, des Verbindungskörpers in jeweils eine Steckaufnahme der Beinstützen zur Ausbildung einer Klemmsteckverbindung zwischen dem Verbindungskörper und der jeweiligen Beinstütze einbringbar oder eingebracht ist. Hierdurch wird erreicht, dass nach Einbringen der Stecklasche des Verbindungskörpers diese mittels der Steckaufnahme bzw. im Zusammenwirken mit der Steckaufnahme geklemmt wird oder ist, wodurch ein sicherer Sitz der Stecklasche in der Steckaufnahme erreicht wird.

Ferner ist an einer Weiterbildung der Erfindung ebenfalls vorgesehen, dass die Feuerkammer mit entsprechenden Steckkörpern, insbesondere Stecklaschen, ausgebildet ist und die Stecklaschen der Feuerkammer in Steckaufnahmen der Beinstützen für die Steckkörper des Feuerkörpers einbringbar sind oder eingebracht werden, so dass ebenfalls eine Klemmsteckverbindung zwischen der Feuerkammer und der jeweiligen Beinstütze ausgebildet ist.

Bei dem zusammengesteckten Grill begrenzen die vertikal ausgerichteten Beinstützen die Grundfläche des Verbindungskörpers, sodass die Standfläche, die durch die Beinstützen begrenzt ist oder wird, der Grundfläche des Verbindungskörpers im Wesentlichen entspricht. In einer weiteren Ausgestaltung ist vorgesehen, dass die Grundfläche der Feuerkammer der Grundfläche des Verbindungskörpers entspricht.

Darüber hinaus zeichnet sich eine Weiterbildung des Stecksystems dadurch aus, dass die Beinstützen jeweils als Eckstiele mit einem, insbesondere durchgehenden, L-Profil ausgebildet sind, wobei die Schenkel der L-Profile jeweils mit einer Querstrebe zur Ausbildung einer Steckaufnahme versehen oder verbunden sind oder die Schenkel der L-Profile jeweils mit zwei voneinander in Längsrichtung der L-Profile beabstandeten Querstreben zur Ausbildung von zwei Steckaufnahmen verbunden sind. Bei der Ausbildung von zwei Steckaufnahmen an einer Beinstütze ist eine Steckaufnahme für die Stecklasche des Verbindungskörpers und die weitere Steckaufnahme für die Stecklasche bzw. den Steckkörper der Feuerkammer vorgesehen.

Dadurch, dass die Beinstützen jeweils als L-Profil ausgebildet sind, ist es möglich, den errichteten Grill auf einer rechteckförmigen oder quadratischen oder auch polygonalen Stellfläche aufzustellen. Hierbei weisen insbesondere die Kanten der aufgestellten Beinstützen voneinander nach außen.

Außerdem zeichnet sich eine Ausführungsform des Stecksystems dadurch aus, dass der Verbindungskörper für die Beinstützen als, insbesondere flacher, Ablagekörper ausgebildet ist. Insbesondere ist hierbei der Ablagekörper einstückig ausgebildet, wobei in den Eckbereichen oder Randbereichen, die mit den Beinstützen verbunden werden, jeweils eine Stecklasche bzw. ein Steckkörper vorhanden ist.

Insbesondere ist die Feuerkammer für das Verbrennungsmaterial mehrteilig ausgebildet, wobei insbesondere die Teile der Feuerkammer schraubenlos oder bolzenlos miteinander verbindbar oder verbunden sind. Hierbei werden ebenfalls die Teile mit der Feuerkammer ohne separate Verbindungsmittel miteinander verbunden. Zum Beispiel werden hierbei Teile der Feuerkammer ineinandergeschoben.

Außerdem ist es bei einer Ausführungsform des Stecksystems vorgesehen, dass wenigstens eine oder mehrere Seitenwände für die Feuerkammer jeweils mittels einer Steckverbindung an der Feuerkammer verbindbar sind. Dies erfolgt erfindungsgemäß ohne Verwendung von separaten Verbindungsmitteln, wie z.B. Bolzen, Klammern etc., da durch Stecken und gegebenenfalls Schieben der Seitenwände die Seitenwände an der Feuerkammer fest angeordnet sind.

Dazu ist in einer Ausgestaltung vorgesehen, dass jeweils zwei, vorzugsweise nicht-fluchtende, Seitenwände für die Feuerkammer mittels einer Steckverbindung und/oder einer Laschensteckverbindung miteinander verbindbar oder verbunden sind. Dabei werden ebenfalls keine separaten bzw. losen Schrauben oder Nieten oder dergleichen verwendet.

Ferner zeichnet sich das Stecksystem dadurch aus, dass wenigstens ein oder mehrere Trennwände in der Feuerkammer einsetzbar oder eingesetzt sind, wobei insbesondere die Trennwand oder die Trennwände mittels einer oder mehrerer Steckverbindungen mit der Feuerkammer und/oder den Seitenwänden für die Feuerkammer verbindbar oder verbunden sind. Dadurch, dass für die Steckverbindungen die Trennwände und die Feuerkammer sowie die Seitenwände derart ausgebildet sind, dass sie ineinander steckbar sind, ist es im Rahmen der Erfindung vorgesehen, keine Verbindungsmittel, wie z.B. Schrauben, Bolzen oder dergleichen, vorzusehen, da die Teile für den mobilen Grill ausschließlich durch Zusammen- oder Ineinanderstecken miteinander dauerhaft verbunden werden.

Des Weiteren zeichnet sich eine Weiterbildung des Stecksystems für den Grill dadurch aus, dass an der Feuerkammer ein Ablagetisch, vorzugsweise seitlich, anordbar oder angeordnet ist, wobei insbesondere der Ablagetisch mittels einer oder mehrerer Steckverbindungen mit der Feuerkammer verbindbar oder verbunden ist und/oder wobei insbesondere der Ablagetisch mittels einer Seitenwand im Zusammenwirken mit der Feuerkammer und/oder im Zusammenwirken mit den Beinstützen arretiert oder arretierbar ist und somit in der gesteckten Position hierdurch blockiert wird oder ist.

Außerdem ist es bei dem Stecksystem vorgesehen, dass zwei einander gegenüberliegende Halteeinrichtungen für einen Rost, insbesondere Grillrost, vorgesehen sind, wobei insbesondere die Halteeinrichtungen in oder an jeweils einer Seitenwand für die Feuerkammer ausgebildet sind. Dadurch ist es möglich, einen Rost, insbesondere Grillrost, oberhalb der Feuerkammer am aufgestellten Grill anzuordnen, wobei vorzugsweise der Grillrost in die Halteeinrichtung eingehängt oder aufgelegt wird.

Darüber hinaus weist vorteilhafterweise die Feuerkammer eine rechteckförmige oder runde oder ovalförmige oder polygonale Grundfläche auf. Alternativ ist die Feuerkammer nach Art einer halben Tonne ausgebildet.

Um den errichteten Grill auf einfache Weise zu bewegen, ist überdies vorgesehen, dass an wenigstens zwei einander gegenüberliegend angeordneten Beinstützen jeweils im unteren Bereich der Beinstützen ein Rad anordbar oder angeordnet ist.

Vorzugsweise sind ein oder mehrere Grillroste oberhalb der Feuerkammer anordbar oder angeordnet.

Darüber hinaus wird die Aufgabe gelöst durch einen Grill, insbesondere mobilen Grill, mit einem Stecksystem für einen derartigen Grill, wie voranstehend beschrieben, wobei wenigstens drei, im Wesentlichen vertikal aufgestellte Beinstützen, insbesondere vier Beinstützen, vorgesehen sind und mit einem Verbindungskörper zum Verbinden der Beinstützen, wobei die Beinstützen im unteren Bereich mittels des Verbindungskörpers unter Ausbildung einer Klemmsteckverbindung miteinander verbunden sind, und mit einer Feuerkammer zur Aufnahme von Verbrennungsmaterial, insbesondere Grillkohle oder Grillbriketts oder Holzkohle, wobei die Feuerkammer mit den, insbesondere allen, Beinstützen jeweils unter Ausbildung einer Klemmsteckverbindung verbunden ist. Zur Vermeidung von Wiederholungen wird auf die obigen Ausführungen verwiesen, die in entsprechender Weise hierfür gelten.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines erfindungsgemä-βen Grills mit seinen steckbaren Einzelteilen;
- Fig. 2: schematisch eine perspektivische Darstellung des Grills aus Fig. 1 im zusammengesetzten Zustand und
- Fig. 3: eine Ausführungsform eines weiteren erfindungsgemä-βen zusammengesetzten Grills.

In den Zeichnungen sind jeweils gleiche oder gleichartige Elemente und/oder Teile mit denselben Bezugsziffern versehen, so dass von einer erneuten Vorstellung jeweils abgesehen wird.

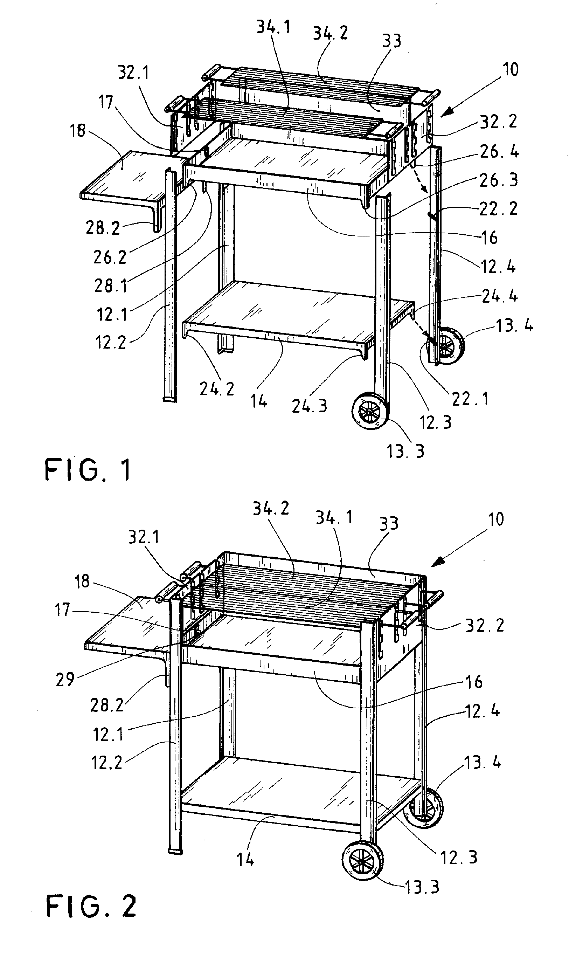

In den Figuren 1 und 2 ist jeweils ein Ausführungsbeispiel eines Grills 10 in einer schematisch perspektivischen Darstellung gezeigt. Der mobile Grill 10 umfasst eine Tragstruktur, die aus vier vertikal ausgerichteten Beinstützen 12.1, 12.2, 12.3 und 12.4 im Zusammenwirken mit einem unteren Einlegebogen 14 und einer oberhalb des Einlegebodens 14 angeordneten Feuerkammer 16 gebildet wird. Der Einlegeboden 14 ist dabei als Verbindungskörper für die Beinstützen 12.1 bis 12.4 ausgebildet.

Die vertikal ausgerichteten Beinstützen 12.1 bis 12.4 sind auf einer rechteckförmigen Grundfläche bzw. Stellfläche angeordnet, wobei die Beinstützen 12.1 bis 12.4 als L-Profile ausgebildet sind. An den Innenseiten der Beinstützen 12.1, 12.2 sind jeweils zwei voneinander beabstandete Aufnahmetaschen 22.1, 22.2 ausgebildet, um darin entsprechende Einstecklaschen des Einlegebodens 14 sowie Einstecklaschen der Feuerkammer 16 aufzunehmen. In Fig. 1 sind die Aufnahmetaschen 22.1 sowie 22.2 der Beinstütze 12.4 erkennbar. Die anderen Beinstützen 12.1, 12.2 sowie 12.3 sind ebenfalls entsprechend mit Aufnahmetaschen an der Innenseite ausgebildet.

Das Einlegeblech 14 weist in den vier Eckbereichen jeweils nach unten weisende Einstecklaschen 24.2, 24.3 sowie 24.4 auf. Die vierte Einstecklasche des Einlegebodens 14 ist in Fig. 1 nicht sichtbar. Die Einstecklaschen 22.2 bis 24.4 werden in die Aufnahmetaschen 22.1 der Beinstützen 12.1 bis 12.4 beim Aufstellen des Grills eingesteckt.

Ebenso weist die Feuerkammer 16 in den Eckkantenbereichen nach unten weisende Einstecklaschen 26.2, 26.3, 26.4 auf, die in die entsprechenden Einsteckaufnahmen 22.2 der Beinstützen 12.1 bis 12.4 eingesteckt werden. Durch Einbringen der Einstecklaschen 24.1 bis 24.4 des Einlegebodens 14 in die Einsteckaufnahmen 22.1 der Beinstützen 12.1 bis 12.4 und unter Einbringen der Einstecklaschen 21.1 bis 26.4 der Feuerkammer 16 in die Steckaufnahmen 22.2 der Beinstützen 12.1 bis 12.4 und ohne Verwendung von Schrauben und Bolzen oder anderer (loser) Verbindungsmittel wird eine stabile Anordnung des steckbaren bzw. des zusammengesteckten Grills 10 erreicht.

Der Einlegeboden 14 ist als horizontal ausgerichteter Verbindungskörper zwischen den Beinstützen 12.1 bis 12.4 ausgebildet, so dass die im Rechteck angeordneten Beinstützen 12.1 bis 12.4 im unteren Bereich des Grills 10 fest miteinander verbunden werden. Hierzu wird durch die Verbindung der Einstecklaschen 24.1 bis 24.4 in Kombination mit den Aufnahmen 22.1 jeweils eine Klemmsteckverbindung ausgebildet, wodurch die Einstecklaschen 24.1 bis 24.4 des Einlegebodens sicher und verrutschfest darin angeordnet sind.

Die Feuerkammer 16 dient zur Aufnahme von Grillkohle oder dergleichen, wobei nach Einstecken der Einstecklaschen 26.1 bis 26.4 in die entsprechenden oberen Steckaufnahmen 22.2 der Beinstützen 12.1 bis 12.4 die Einstecklaschen verrutschsicher darin angeordnet sind. Durch das Zusammenwirken der Einstecklaschen 24.1 bis 24.4 des Einlegebodens 14 und der Einstecklaschen 26.1 bis 26.4 der Feuerkammer 16 mit den Steckaufnahmen 22.1 und 22.4 wird eine dauerhaft stabile Anordnung des Grills 10 erreicht, wobei für die Steckverbindungen des Einlegebodens 14 sowie der Feuerkammer 16 mit den Beinstützen 12.1 bis 12.4 keine weiteren (losen) Verbindungsmittel vorgesehen sind.

Darüber hinaus ist für den Grill 10 ein seitlicher Ablagetisch 18 vorgesehen, der seitlich an den Beinstützen 12.1, 12.2 angeordnet wird. Der Ablagetisch 18 weist im Bereich der Beinstützen 12.1, 12.2 nach unten weisende Einstecklaschen 28.1, 28.2 auf, die in entsprechende Aufnahmen an der Außenseite der Beinstützen 12.1, 12.2 eingesteckt werden. Ferner weist der Ablagetisch 18 an der der Feuerkammer 16 zugewandten Seite im mittleren Bereich einen hakenförmigen Vorsprung 29 auf, der in einer Ausnehmung 17 der Feuerkammer 16 eingehängt wird. Hierbei wird der Ablagetisch 18 ebenfalls ohne Verwendung von losen Befestigungsmitteln, wie z.B. Schrauben oder Klemmen, an den Beinstützen 12.1, 12.2 fest angeordnet. Nach Einstecken der Einstecklaschen 28.1, 28.2 in die äußeren Steckaufnahmen der Beinstützen 12.1 bis 12.4 wird der Ablagetisch 18 seitlich am Grundgestell des Grills 10 angeordnet.

Außerdem verfügt der Grill 10 über an den Schmalseiten des Grills 10 anordbare Seitenbleche bzw. Einsteckbleche 32.1, 32.2, die in entsprechende Laschen an den Beinstützen 12.1 und 12.2 sowie 12.3 und 12.4 seitlich oberhalb der Feuerkammer 16 einsteckbar sind. Die Einsteckbleche 32.1, 32.2 sind mit entsprechenden Haltenasen für Grillroste 34.1, 34.2 ausgebildet, so dass die Grillroste 34.1, 34.2 in einem gewünschten Abstand zur Kohle in der Feuerkammer 16 angeordnet werden. Die Grillroste 23.1, 34.2 weisen an den Stirnseiten jeweils entsprechende Haltegriffe oder dergleichen auf, wodurch die Höhe der Grillroste 34.1, 34.2 auf einfache Weise manuell eingestellt werden kann.

Darüber hinaus ist auch ein weiteres als Windschutzblech ausgebildetes Einsteckblech 33 vorgesehen, das an einer Längsseite zwischen den Beinstützen 12.1 und 12.4 in entsprechende Aufnahmen der Beinstützen oberhalb der Feuerkammer 16 eingesteckt wird. Die Anordnung der Einsteckbleche 32.1, 32.2 sowie 33 erfolgt ebenfalls ohne Verwendung von entsprechenden losen, manuell betätigbaren Verbindungsmitteln.

Bei dem Ausführungsbeispiel in Fig. 1 bzw. Fig. 2 sind die Beinstützen 12.1 und 12.2 gleichlang, während die anderen Beinstützen 12.3 und 12.4 ebenfalls gleichlang sind. Allerdings sind die Beinstützen 12.1, 12.2 länger als die Beinstützen 12.3, 12.4, da an der Unterseite der Beinstützen 12.3, 12.4 entsprechende Räder 13.3, 13.4 angeordnet werden. Hierbei werden beispielsweise die Räder 13.3 durch Aufstecken an den Beinstützen 12.3, 12.4 angeordnet. Darüber hinaus ist es im Rahmen der Erfindung denkbar, dass die Räder 13.3, 13.4 an den Beinstützen 12.3, 12.4 unter Verwendung von einer Schraube oder dergleichen befestigt werden. Durch die Anordnung der Räder 13.3, 13.4 ist der Grill 10 auf einfache Weise durch eine Person verfahrbar.

Im Rahmen der Erfindung ist es ebenfalls möglich, dass die Anzahl der vertikalen Beinstützen 12.1 bis 12.4 größer als vier ist, wobei die Beinstützen verbindungsmittelfrei mit der Feuerkammer 16 und dem Einlageboden 14 durch einfache Steckverbindungen miteinander verbunden werden.

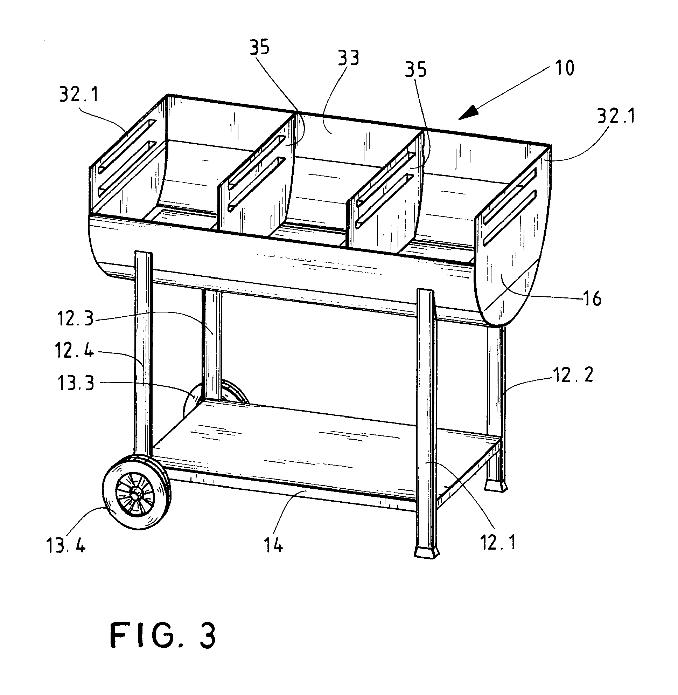

In Fig. 3 ist ein weiteres Ausführungsbeispiel eines erfindungsgemäßen Grills 10 in einer perspektivischen Darstellung gezeigt, wobei der Grill 10 aus Gründen der Übersichtlichkeit ohne Grillroste dargestellt ist. Die Feuerkammer 16 ist wannenartig oder tonnenartig ausgebildet, wobei die Feuerkammer 16 selbst aus mehreren Feuerkammerteilen zusammengesteckt sein kann. Die Feuerkammer 16 ist ferner mit entsprechenden Einstecklaschen im Bereich der Beinstützen 12.1 bis 12.4 ausgebildet, so dass die Einstecklaschen der Feuerkammer 16 in oberseitige Aufnahmen der Beinstützen 12.1 bis 12.4 aufgesteckt werden.

Im Inneren der Feuerkammer 16 sind mehrere Trennbleche 35 angeordnet, wobei die Trennbleche 35 mehrere über Steckverbindungen oder Klemmverbindungen miteinander verbindbare Teile aufweisen. Dabei sind die Trennbleche 35 ebenfalls mit dem an der Längsseite angeordneten Einsteckblech 33 unter Ausbildung einer einhakenden Verbindung verbunden. Die Trennbleche 35 sowie die seitlichen Einsteckbleche 32.1, 32.2 sind mit entsprechenden Halteführungen ausgebildet, auf denen Grillroste gehalten werden.

Darüber hinaus ist es im Rahmen der Erfindung vorstellbar, dass die einzelnen Teile des mobilen Grills durch Klick-Steckverbindungen miteinander verbunden werden. Ferner ist es im Rahmen der Erfindung vorgesehen, dass auch Rundgrills oder Grills mit einer ovalen Grundfläche auf diese Weise zusammengesetzt werden können. Erfindungsgemäß werden dabei die einzeln miteinander zu verbindenden Teile des Grills unter Umständen mit Ausnahme der Räder durch entsprechende Steckverbindungen miteinander und ohne Verwendung von Schrauben oder Bolzen miteinander verbunden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Grill
- 12.1, 12.2, 12.3, 12.4: Beinstützen
- 13.3, 13.4: Rad
- 14: Einlegeboden
- 16: Feuerkammer
- 17: Ausnehmung
- 18: Ablagetisch
- 22.1: Steckaufnahme
- 22.2: Steckaufnahme
- 24.1 bis 24.4: Einstecklasche
- 26.1 bis 26.4: Einstecklasche
- 28.1, 28.2: Einstecklasche
- 29: Vorsprung
- 32.1, 32.2: Einsteckblech
- 33: Einsteckblech
- 34.1, 34.2: Grillrost
- 35: Trennblech

## Patentansprüche

1. Stecksystem eines, vorzugsweise mobilen, Grills (10) mit wenigstens drei, im Wesentlichen vertikalen, aufstellbaren oder aufgestellten Beinstützen (12.1, 12.2, 12.3, 12.4), insbesondere mit vier Beinstützen (12.1, 12.2, 12.3, 12.4), mit einem Verbindungskörper (14) zum Verbinden der Beinstützen (12.1, 12.2, 12.3, 12.4), wobei die Beinstützen (12.1, 12.2, 12.3, 12.4) im unteren Bereich mittels des Verbindungskörpers (14) jeweils miteinander unter Ausbildung einer Klemmsteckverbindung verbindbar oder verbunden sind, und mit einer oberhalb des Verbindungskörpers (14) angeordneten oder anordbaren Feuerkammer (16) zur Aufnahme von Verbrennungsmaterial, insbesondere Grillkohle oder Grillbriketts oder Holzkohle, wobei die, vorzugsweise einteilige oder mehrteilige, Feuerkammer (16) mit den, insbesondere allen, Beinstützen (12.1, 12.2, 12.3, 12.4) jeweils unter Ausbildung einer Klemmsteckverbindung mit einer Beinstütze (12.1, 12.2, 12.3, 12.4) verbindbar oder verbunden ist.

2. Stecksystem nach Anspruch 1, **dadurch gekennzeichnet, dass** der Verbindungskörper (14) für die Beinstützen (12.1, 12.2, 12.3, 12.4) mit Steckkörpern (24.2, 24.3, 24.4), insbesondere Stecklaschen (24.2, 24.3, 24.4), ausgebildet ist und die Beinstützen (12.1, 12.2, 12.3, 12.4) jeweils mit Steckaufnahmen (22.1) für die Steckkörper (24.2, 24.3, 24.4) versehen sind, wobei ein Steckkörper (24.2, 24.3, 24.4), insbesondere eine Stecklasche (24.2, 24.3, 24.4), des Verbindungskörpers (14) in jeweils eine Steckaufnahme (22.1) der Beinstützen (12.1, 12.2, 12.3, 12.4) zur Ausbildung einer Klemmsteckverbindung zwischen dem Verbindungskörper (14) und der jeweiligen Beinstütze (12.1, 12.2, 12.3, 12.4) einbringbar oder eingebracht ist.

3. Stecksystem nach Anspruch 1 oder 2, **dadurch gekennzeichnet, dass** die Beinstützen (12.1, 12.2, 12.3, 12.4) jeweils als Eckstiele (12.1, 12.2, 12.3, 12.4) mit einem, insbesondere durchgehenden, L-Profil ausgebildet sind, wobei die Schenkel der L-Profile jeweils mit einer Querstrebe zur Ausbildung einer Steckaufnahme (22.1, 22.2) verbunden sind oder die Schenkel der L-Profile jeweils mit zwei voneinander in Längsrichtung der L-Profile beabstandeten Querstreben zur Ausbildung von zwei Steckaufnahmen (22.1, 22.2) verbunden sind.

4. Stecksystem nach einem der Ansprüche 1 bis 3, **dadurch gekennzeichnet, dass** der Verbindungskörper (14) für die Beinstützen (12.1, 12.2, 12.3, 12.4) als, insbesondere flacher, Ablagekörper (14) ausgebildet ist.

5. Stecksystem nach einem der Ansprüche 1 bis 4, **dadurch gekennzeichnet, dass** die Feuerkammer (16) für das Verbrennungsmaterial mehrteilig ausgebildet ist, wobei insbesondere die Teile der Feuerkammer (16) schraubenlos oder bolzenlos miteinander verbindbar oder verbunden sind.

6. Stecksystem nach einem der Ansprüche 1 bis 5, **dadurch gekennzeichnet, dass** wenigstens eine oder mehrere Seitenwände (32.1, 32.2; 33, 35) für die Feuerkammer (16) jeweils mittels einer Steckverbindung an der Feuerkammer (16) verbindbar oder verbunden sind.

7. Stecksystem nach Anspruch 6, **dadurch gekennzeichnet, dass** jeweils zwei, vorzugsweise nicht-fluchtende, Seitenwände (32.1, 33; 32.2; 33; 33, 35) für die Feuerkammer (16) mittels einer Steckverbindung und/oder einer Laschensteckverbindung miteinander verbindbar oder verbunden sind.

8. Stecksystem nach einem der Ansprüche 1 bis 7, **dadurch gekennzeichnet, dass** wenigstens ein oder mehrere Trennwände (35) in der Feuerkammer (16) einsetzbar oder eingesetzt sind, wobei insbesondere die Trennwand (35) oder die Trennwände (35) mittels einer oder mehrerer Steckverbindungen mit der Feuerkammer (16) und/oder den Seitenwänden für die Feuerkammer (16) verbindbar oder verbunden sind.

9. Stecksystem nach einem der Ansprüche 1 bis 8, **dadurch gekennzeichnet, dass** an der Feuerkammer (16) ein Ablagetisch (18), vorzugsweise seitlich, anordbar oder angeordnet ist, wobei insbesondere der Ablagetisch (18) mittels einer oder mehrerer Steckverbindungen mit der Feuerkammer (16) verbindbar oder verbunden ist und/oder wobei insbesondere der Ablagetisch (18) mittels einer Seitenwand (32.1) im Zusammenwirken mit der Feuerkammer (16) und/oder im Zusammenwirken mit den Beinstützen (12.1, 12.2, 12.3, 12.4) arretiert oder arretierbar ist.

10. Stecksystem nach einem der Ansprüche 1 bis 9, **dadurch gekennzeichnet, dass** zwei einander gegenüberliegende Halteeinrichtungen für einen Rost (34.1, 34.2), insbesondere Grillrost (34.1, 34.2), vorgesehen sind, wobei insbesondere die Halteeinrichtungen in oder an jeweils einer Seitenwand (32.1, 32.2) für die Feuerkammer (16) ausgebildet sind.

11. Stecksystem nach einem der Ansprüche 1 bis 10, **dadurch gekennzeichnet, dass** die Feuerkammer (16) eine rechteckförmige oder runde oder ovalförmige oder polygonale Grundfläche aufweist oder die Feuerkammer (16) nach Art einer halben Tonne ausgebildet ist.

12. Stecksystem nach einem der Ansprüche 1 bis 11, **dadurch gekennzeichnet, dass** an wenigstens zwei einander gegenüberliegend angeordneten Beinstützen (12.1, 12.2, 12.3, 12.4) jeweils im unteren Bereich der Beinstützen (12.1, 12.2, 12.3, 12.4) ein Rad (13.3, 13.4) anordbar oder angeordnet ist.

13. Stecksystem nach einem der Ansprüche 1 bis 12, **dadurch gekennzeichnet, dass** ein oder mehrere Grillroste (34.1, 34.2) oberhalb der Feuerkammer (16) anordbar oder angeordnet sind.

14. Grill (10), insbesondere mobiler Grill (10), mit einem Stecksystem nach einem der Ansprüche 1 bis 13, wobei wenigstens drei, im Wesentlichen vertikal aufgestellte Beinstützen (12.1, 12.2, 12.3, 12.4), insbesondere vier Beinstützen (12.1, 12.2, 12.3, 12.4), vorgesehen sind und mit einem Verbindungskörper (14) zum Verbinden der Beinstützen (12.1, 12.2, 12.3, 12.4), wobei die Beinstützen (12.1, 12.2, 12.3, 12.4) im unteren Bereich mittels des Verbindungskörpers (14) unter Ausbildung einer Klemmsteckverbindung miteinander verbunden sind, und mit einer Feuerkammer (16) zur Aufnahme von Verbrennungsmaterial, insbesondere Grillkohle oder Grillbriketts oder Holzkohle, wobei die Feuerkammer (16) mit den, insbesondere allen, Beinstützen (12.1, 12.2, 12.3, 12.4) jeweils unter Ausbildung einer Klemmsteckverbindung verbunden ist.
